(19) Europäisches Patentamt
European Patent Office
Office européen des brevets

(11) Veröffentlichungsnummer: **0 024 353**
**B1**

(12) # EUROPÄISCHE PATENTSCHRIFT

(45) Veröffentlichungstag der Patentschrift: **19.10.83**

(51) Int. Cl.[3]: **C 08 K 5/04,** C 08 K 5/09, C 08 K 5/13, C 08 J 3/20

(21) Anmeldenummer: **80104876.0**

(22) Anmeldetag: **16.08.80**

(54) **Verfahren zur Behandlung eines Polymerisates oder Copolymerisates des Vinylchlorids.**

(30) Priorität: **21.08.79 DE 2933731**

(43) Veröffentlichungstag der Anmeldung: **04.03.81 Patentblatt 81/9**

(45) Bekanntmachung des Hinweises auf die Patenterteilung: **19.10.83 Patentblatt 83/42**

(84) Benannte Vertragsstaaten: **BE DE FR GB IT NL SE**

(56) Entgegenhaltungen:
**DE-A-2 731 779**
**DE-B-1 232 345**
**FR-A-2 200 301**
**FR-A-2 289 555**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Hartwimmer, Robert, Dr., Della-Croce-Strasse 10a, D-8263 Burghausen/Salzach (DE)**
Erfinder: **Huber, Hans, Dr., Lohnerstrasse 1, D-8261 Burgkirchen/Alz (DE)**

**EP 0 024 353 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Behandlung eines Polymerisats oder Copolymerisats des Vinylchlorids

Die Erfindung betrifft ein Verfahren zur Behandlung eines Polymerisats oder Copolymerisats des Vinylchlorids, wobei ein Salz der Ameisensäure und ein Derivat des Di-(hydroxyphenyl)-methans nach der Polymerisation des Vinylchlorids, jedoch vor Beendigung der Trocknung des Polymerpulvers zugegeben werden.

Es ist bekannt, die Wärme- und Lichtstabilität von Vinylchloridpolymerisaten, insbesondere von Plastisolen auf Basis von Vinylchlorid, durch Zusatz von Natrium- oder Kaliumsalzen der Ameisensäure zu verbessern. Ferner sind thermoplastische Formmassen auf Basis von Emulsionspolymerisaten des Vinylchlorids bekannt, die einen Zusatz von 0,05 bis 1 Gew.-% eines Calcium-, Magnesium- oder Zinksalzes der Ameisensäure als Vorstabilisator, zusammen mit üblichen Stabilisatoren gegen die Verfärbung unter dem Einfluß von Hitze und Licht enthalten. Als übliche Stabilisatoren sind Organozinn-Verbindungen, Barium-, Cadmium-, Calcium- oder Zinksalze, Bleiverbindungen, Aminocrotonsäureester und Phenylthioharnstoff beschrieben.

In neuerer Zeit wurde ein Verfahren zur Behandlung von Vinylchloridpolymerisaten bekannt, bei welchem man das Polymerisat einer thermischen Behandlung bei 135 bis 165°C in Anwesenheit von Methanol und wenigstens einem Alkalimetall- oder Erdalkalimetallsalz der Ameisensäure unterwirft. Das Verfahren gibt nur gute Ergebnisse, wenn kein ameisensaures Salz eines anderen Metalls, beispielsweise Zinkformiat, zugegen ist. Es ist überdies technisch aufwendig, da relativ lange Zeit (2 bis 6 Stunden) unter Druck bei erhöhter Temperatur behandelt werden muß unter Einsatz erheblicher Mengen Methylalkohol bzw. Methylalkohol enthaltender Flüssigkeit (100 Gewichtsteile und mehr Flüssigkeit auf 100 Gewichtsteile Polymerisat).

Bei keinem der genannten bekannten Verfahren bzw. Formmassen ist die Mitverwendung von phenolgruppenhaltigen Verbindungen beschrieben.

Es ist ferner bekannt, beispielsweise Bisphenol A und andere Derivate des Di-(hydroxyphenyl)-methans zur Stabilisierung von Polyvinylchlorid entweder für sich allein oder zusammen mit einem üblichen Stabilisator in Form eines Metallsalzes einer organischen Säure, beispielsweise Bleistearat, einzusetzen.

Es wurde nun gefunden, daß eine überraschend gute Wärmestabilisierung von Polymerisaten oder Copolymerisaten des Vinylchlorids erreicht wird, wenn man diesen nach der Polymerisation, jedoch vor Beendigung der Trocknung, eine Mischung von ameisensauren Salzen und Derivaten des Di-(hydroxyphenyl)-methans zusetzt. Die Wirkung dieser Kombination geht weit über die Wirkung der Einzelkomponenten hinaus, eine Tatsache, die nur durch eine besondere synergistische Wirkung der beiden Komponenten des erfindungsgemäßen Gemisches erklärlich ist.

Gegenstand der Erfindung ist demnach ein Verfahren zur Behandlung eines Polymerisats oder Copolymerisats des Vinylchlorids, das 50 bis 100 Gew.-%, bezogen auf das reine Polymerisat, polymerisierte Vinylchlorid-Einheiten enthält und das nach üblichem Verfahren in wäßriger Emulsion, wäßriger Suspension, in Masse oder in der Gasphase hergestellt worden ist, mit Alkali- oder Erdalkalimetallsalzen der Ameisensäure, dadurch gekennzeichnet, daß dem Polymerisat nach seiner Herstellung und, sofern vorhanden, nach Abtrennung der Hauptmenge der bei der Polymerisation verwendeten wäßrigen Flotte, jedoch vor Beendigung der Trocknung, entweder feinteilig in fester Form oder in einer Flüssigkeit in dispergierter Form oder in Form einer Lösung zugesetzt werden:

a) mindestens ein Natrium-, Kalium-, Magnesium- oder Calciumsalz der Ameisensäure und
b) mindestens eine Verbindung der Formel

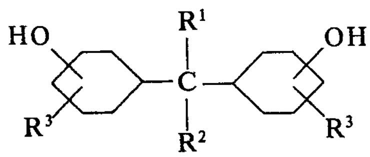

(I)

worin bedeuten:

$R^1$ ein Alkylradikal mit 1 bis 3 C-Atomen;
$R^2$ ein Alkylradikal mit 1 bis 2 C-Atomen;
$R^3$ ein Wasserstoff- oder ein Chlor-Atom oder ein Alkylradikal mit 1 bis 3 C-Atomen;
OH eine Hydroxylgruppe in 2- oder 4-Stellung zur

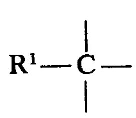 -Gruppe

wobei der Zusatz in einer solchen Menge erfolgt, daß das Polymerisat nach der Trocknung
0,05 bis 2 Gew.-%, bezogen auf das Polymerisat, von der Verbindung a) und
0,005 bis 1 Gew.-%, bezogen auf das Polymerisat, von der Verbindung b) enthält.

Bevorzugt wird als Verbindung a) ein Kalium- oder Natriumsalz der Ameisensäure eingesetzt.

Enthält das Polymerisat oder Copolymerisat des Vinylchlorids nach der Trocknung unter 0,05 Gew.-%, bezogen auf das Polymerisat, von einem der genannten Salze der Ameisensäure, so ist die stabilisierende Wirkung nicht mehr ausreichend, oberhalb 2 Gew.-%, bezogen auf das Polymerisat, wird zwar der stabilisierende Effekt noch beobachtet, es treten jedoch andere Nachteile, beispielsweise Verschlechterung der optischen Eigenschaften, auf. Besonders gute Ergebnisse werden erhalten, wenn das Polymerisat 0,1 bis 0,8, vorzugsweise 0,15 bis 0,4 Gew.-%, bezogen auf das Polymerisat, der Mischungskomponente a) enthält.

Als Verbindung b) wird bevorzugt eine Verbindung der obenstehenden Formel I verwendet, in der $R^3$ ein Wasserstoffatom und OH eine Hydroxylgruppe in 4-Stellung zur

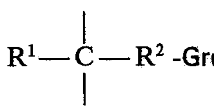 -Gruppe

bedeutet. Besonders bevorzugt wird Dimethyl-di-(4-hydroxyphenyl)-methan eingesetzt. Beispiele für weitere bevorzugt zu verwendende Verbindungen sind:
Methylethyl-di-(4-hydroxyphenyl)-methan und n-Propyl-ethyl-di-(4-hydroxyphenyl)-methan. Ferner sind für die Zwecke der Erfindung beispielsweise folgende Verbindungen brauchbar:
Dimethyl-(3-methyl-4-hydroxyphenyl)-methan; Methyl-ethyl-di-(2-hydroxy-4-chlorphenyl)-methan und Dimethyl-di-(3-isopropyl-4-hydroxyphenyl)-methan.

Die Verbindung b) zeigt beginnende Wirksamkeit ab 0,005 Gew.-%, bezogen auf das Polymerisat. Die Wirksamkeit steigt mit der Zugabemenge, wobei jedoch oberhalb 1 Gew.-%, bezogen auf das Polymerisat, Nachteile beobachtet werden, die eine weitere Steigerung nicht ratsam machen. Besonders gute Ergebnisse werden im Bereich von 0,01 bis 0,5 Gew.-% und insbesondere von 0,01 bis 0,2 Gew.-%, jeweils bezogen auf das Polymerisat, erhalten.

Für eine gute Wirksamkeit der erfindungsgemäßen Mischung ist die Art der Einbringung der Mischungskomponenten a) und b) von beträchtlicher Bedeutung. Es wurde gefunden, daß eine verbesserte Wirksamkeit erzielt wird, wenn die genannten Mischungskomponenten dem Polymerisat nach der Polymerisation, aber vor dessen endgültiger Trocknung in möglichst feinteiliger Form zugegeben werden.

Zweckmäßig wird das Polymerisat während der Zugabe bewegt, beispielsweise durch Rühren, Umschaufeln, Aufwirbeln, Zentrifugieren, Herabrieselnlassen oder Zerstäuben.

Die Mischungskomponenten a) und/oder b) werden entweder feinteilig, das heißt, mit einer mittleren Teilchengröße von 5 bis 25 µm, in fester Form oder in einer Flüssigkeit, in der die Komponenten praktisch unlöslich sind, dispergiert, dem Polymerisat zugegeben. Insbesondere für die Komponente b) ist eine Zugabe in Form einer wäßrigen Dispersion vorteilhaft. Diese Komponente kann jedoch auch in Form einer Lösung in einem geeigneten leichtflüchtigen organischen Lösungsmittel mit 1 bis 4 C-Atomen, beispielsweise Methylacetat, Ethylacetat, Chloroform und vorzugsweise einem Lösungsmittel, das mit Wasser mischbar ist, beispielsweise Methanol, Ethanol oder Aceton, gegebenenfalls unter Zugabe von Wasser, dem Polymerisat beigemischt werden.

Die Mischungskomponente a) wird vorteilhaft in Wasser gelöst dem Polymerisat zugesetzt. Dieser wäßrigen Lösung können 30 bis 40 Gew.-%, bezogen auf die Lösung, eines geeigneten organischen Lösungsmittels mit 1 bis 4 C-Atomen, beispielsweise Methanol, Ethanol oder Aceton, beigegeben werden.

Besonders vorteilhaft ist es, die Lösungen oder Dispersionen der Mischungskomponenten a) bzw. b) in versprühter Form auf das in Bewegung gehaltene Polymere zu geben und das so behandelte Polymerisat anschließend bei normalem Atmosphärendruck oder einem darunterliegenden Druck bei etwa 40 bis 100° C zu trocknen.

Falls ein Polymerisat behandelt wird, das durch Emulsions- oder Suspensionspolymerisation in wäßriger Flotte hergestellt wurde, ist die Hauptmenge dieser wäßrigen Flotte vor Zugabe der Mischungskomponenten a) und b) abzutrennen. Beim Suspensionspolymerisationsverfahren erfolgt die Abtrennung zweckmäßig durch Abfiltrieren oder Dekantieren, beim Emulsionspolymerisations-Verfahren durch Versprühen des polymerisierten Latex, das heißt, während der Versprühtrocknung werden die Komponenten a) und b) in Flüssigkeit gelöst oder dispergiert in feinteilig versprühter Form zugegeben.

Bei Masse- oder Gasphasenpolymerisaten erfolgt die Zugabe der Komponenten a) und b) in gelöster oder dispergierter Form nach Entspannen des Polymerisationsansatzes und Abführen der Hauptmenge des nicht-umgesetzten monomeren Vinylchlorids. Die erzeugte Mischung wird anschließend, wie bei den Emulsions- bzw. Suspensionspolymerisaten bei normalem Atmosphärendruck oder einem darunterliegenden Druck bei 40 bis 100° C getrocknet.

Die Polymerisate oder Copolymerisate des Vinylchlorids, die erfindungsgemäß behandelt werden,

können durch Polymerisation in wäßriger Emulsion, Suspension oder in Masse sowie auch durch Gasphasenpolymerisation hergestellt worden sein. Unter »Copolymerisate« sind nicht nur solche zu verstehen, bei denen ein oder mehrere mit Polyvinylchlorid polymerisierbare Comonomere statistisch verteilt in das gesamte Polymermolekül eingebaut sind, sondern auch solche, die aus Blöcken von polymerisierten Vinylchlorid-Einheiten und polymerisierten Einheiten anderer Monomerer aufgebaut sind. Ebenso sind darunter zu verstehen auch sogenannte Pfropfpolymerisate, bei denen auf ein Grundpolymerisat, das seinerseits aus reinem Polyvinylchlorid oder aus einem Vinylchloridcopolymerisat der eingangs beschriebenen Art bestehen kann, ein anders zusammengesetztes, sogenanntes »Pfropfreis« aufpolymerisiert ist. Dieses »Pfropfreis« ist häufig seinerseits ein Polymeres, das zum überwiegenden Teil nicht aus polymerisierten Vinylchlorid-Einheiten besteht und während der Grund-Polymerisation oder -Copolymerisation des Vinylchlorids, nach Erreichen eines bestimmten Umsatzes, zugegeben wird, wonach die Aufpfropfung auf das Basispolymere erfolgt.

Bevorzugt werden Polymerisate oder Copolymerisate des Vinylchlorids behandelt, die 80 bis 100 Gew.-%, bezogen auf den Polymerisat-Anteil, polymerisierte Vinylchlorid-Einheiten enthalten.

Für erfindungsgemäße Behandlung geeignete Polymerisate und Copolymerisate können kontinuierlich oder absatz(chargen-)weise mit oder ohne Verwendung eines Saat-Vorpolymerisats hergestellt werden. Es kann dabei in Gegenwart von 0,001 bis 3 Gew.-%, vorzugsweise 0,01 bis 0,3 Gew.-%, bezogen auf Monomere radikalbildender Katalysatoren, wie zum Beispiel Diaryl-Diacylperoxide wie Diacetyl-, Acetylbenzoyl-, Dilauroyl-, Dibenzoyl-, Bis-2,4-dichlorbenzoyl-, Bis-2-methyl-benzoylperoxid; Dialkylperoxide wie Di-tert.-butylperoxid, Perester wie tert.-Propylpercarbonat; tert.-Butylperacetat, tert.-Butylperoctoat, tert.-Butylperpivalat; Dialkylperoxy-dicarbonate wie Diisopropyl-, Diethylhexyl-, Dicyclohexyl-, Diethylcyclohexylperoxydicarbonate; gemischte Anhydride von organischen Säuren wie Acetylcyclohexylsulfonylperoxide, als Polymerisationskatalysatoren bekannte Azoverbindungen wie Azoisobuttersäurenitril sowie Boralkyle, außerdem Persulfate wie Kalium-, Natrium- oder Ammoniumpersulfat, Wasserstoffperoxid, tert.-Butylhydroperoxid oder andere wasserlösliche Peroxide sowie auch Mischungen verschiedener Katalysatoren polymerisiert werden, wobei peroxidische Katalysatoren auch in Gegenwart von 0,01 bis 1 Gew.-%, bezogen auf Monomere, einer oder mehrerer reduzierender Substanzen, die zum Aufbau eines Redox-Katalysatorsystems geeignet sind, wie zum Beispiel Sulfite, Bisulfite, Dithionite, Thiosulfate, Aldehyd-Sulfoxylate, zum Beispiel Natrium-Formaldehydsulfoxylat, eingesetzt werden können. Gegebenenfalls kann die Polymerisation durch Peroxid-Katalysatoren in Gegenwart von löslichen Metallsalzen, beispielsweise des Kupfers, Silbers, Eisens, Aluminiums oder Chroms, durchgeführt werden, wobei 0,05 bis 10 Teile des Metallkations des Salzes je 1 Million Teile der verwendeten Monomeren eingesetzt werden.

Ferner kann die Polymerisation in Gegenwart von 0,01 bis 1 Gew.-%, vorzugsweise 0,05 bis 0,3 Gew.-%, bezogen auf Monomere, von ein oder mehreren Schutzkolloiden, wie beispielsweise Polyvinylalkohol, der gegebenenfalls noch bis zu 40 Mol-% Acetylgruppen enthält, Cellulosederivate wie wasserlösliche Methylcellulose, Carboxymethylcellulose, Hydroxyethylcellulose, Methylhydroxypropylcellulose sowie Gelatine, ferner Mischpolymerisate von Maleinsäure bzw. deren Halbestern und Styrolen stattfinden.

Außerdem kann die Polymerisation in Gegenwart von 0,01 bis 5 Gew.-%, bezogen auf Monomere, von einem oder mehreren Emulgatoren durchgeführt werden, wobei die Emulgatoren auch in Mischung mit den obengenannten Schutzkolloiden eingesetzt werden können. Als Emulgatoren können anionische, amphotere, kationische sowie nichtionogene verwendet werden. Als anionische Emulgatoren sind geeignet beispielsweise Alkali-, Erdalkali-, Ammoniumsalze von Fettsäuren wie Laurin-, Palimitin- oder Stearinsäure, von sauren Phosphorsäurealkylestern wie Diethylhexylphosphorsäure, von sauren Fettalkoholschwefelsäureestern, von Paraffinsulfosäuren, von Alkylarylsulfosäuren wie Dodecylbenzol- oder Dibutylnaphthalinsulfosäure, von Sulfobernsteinsäuredialkylestern sowie die Alkali- und Ammoniumsalze von epoxygruppenhaltigen Fettsäuren wie Epoxystearinsäure, von Umsetzungsprodukten von Persäuren, zum Beispiel Peressigsäure mit ungesättigten Fettsäuren wie Öl- oder Linolsäure oder ungesättigten Oxyfettsäuren wie Rizinolsäure. Als amphotere bzw. kationenaktive Emulgatoren sind beispielsweise geeignet:
Alkylbetaine wie Dodecylbetain sowie Alkylpyridiumsalze wie Laurylpyridiniumhydrochlorid, ferner Alkylammoniumsalze wie Oxethyldodecylammoniumchlorid. Als nichtionogene Emulgatoren sind beispielsweise geeignet:
Teilfettsäureester mehrwertiger Alkohole wie Glycerinmonostearat, Sorbitmonolaurat, -oleat oder -palmitat, Polyoxyethylenether von Fettalkoholen oder aromatischen Hydroxyverbindungen; Polyoxyethylenester von Fettsäuren sowie Polypropylenoxid-Polyethylenoxid-Kondensationsprodukte.

Neben Katalysatoren, gegebenenfalls Schutzkolloiden und/oder Emulgatoren kann die Polymerisation in Gegenwart von Puffersubstanzen, beispielsweise Alkaliacetate, Borax; Alkaliphosphate, Alkalicarbonate, Ammoniak sowie von Molekülgrößen-Reglern, wie beispielsweise aliphatische Aldehyde mit 2 bis 4 Kohlenstoffatomen, Chlorkohlenwasserstoffe, wie zum Beispiel Di- und Trichlorethylen, Chloroform, Methylenchlorid, Mercaptane und Propan durchgeführt werden.

Zur Copolymerisation mit Vinylchlorid sind beispielsweise folgende Monomere geeignet:
Olefine wie Ethylen oder Propylen; Vinylester von geradkettigen oder verzweigten Carbonsäuren mit 2

bis 20, vorzugsweise 2 bis 4 Kohlenstoffatomen wie Vinylacetat, -propionat, -butyrat, -2-ethylhexoat, Vinylisotridecansäureester; Vinylhalogenide wie Vinylfluorid, Vinylidenfluorid, Vinylidenchlorid; Vinylether, Vinylpyridin, ungesättigte Säuren wie Malein-, Fumar-, Acryl-, Methacrylsäure und deren Mono- oder Diester mit Mono- oder Dialkoholen mit 1 bis 10 Kohlenstoffatomen; Acrylnitril oder Styrol.

Zur Pfropfpolymerisation können beispielsweise elastomere Polymerisate verwendet werden, die durch Polymerisation von einem oder mehreren folgender Monomerer erhalten wurden: Diene, wie Butadien, Cyclopentadien; Olefine, wie Ethylen, Propylen; Styrol; ungesättigte Säuren wie Acryl- oder Methacrylsäure sowie deren Ester mit Mono- oder Dialkoholen mit 1 bis 10 Kohlenstoffatomen; Acrylnitril; Vinylverbindungen wie Vinylester von geradkettigen oder verzweigten Carbonsäuren mit 2 bis 20, vorzugsweise 2 bis 4 Kohlenstoffatomen; Vinylhalogenide wie Vinylidenchlorid und, zusammen mit mindestens einem der vorgenannten Monomeren, Vinylchlorid.

Ein erfindungsgemäß behandeltes Polymerisat wird im allgemeinen zu einer thermoplastischen Formmasse verarbeitet, die neben Vinylchloridpolymerisat oder -copolymerisat zweckmäßig Gleitmittel in Mengen von 0,1 bis 6 Gew.-%, bezogen auf die Formmasse, enthält. Als Gleitmittel können beispielsweise ein oder mehrere höhere aliphatische Carbonsäuren und/oder Oxycarbonsäuren sowie deren Ester und Amide wie Stearinsäure, Montansäure, Glycerinmonooleat, Bis-stearoyl- bzw. Bispalmitoyl-ethylendiamin, Montansäureester von Ethandiol oder 1,3-Butandiol sowie auch Fettalkohole mit mehr als 10 Kohlenstoffatomen oder deren Ether, ferner niedermolekulare Polyolefine, Hartparaffine und andere, für die Verarbeitung von Polyvinylchlorid bekannte Gleitmittel verwendet werden.

Neben Gleitmitteln enthält die Formmasse zweckmäßig noch 0 bis 5, vorzugsweise 0,3 bis 3 Gew.-%, bezogen auf die Formmasse, an bekannten Wärmestabilisatoren für Polyvinylchlorid, ausgenommen Formiate und Verbindungen der Formel I. Unter den bekannten Stabilisatoren für Polyvinylchlorid werden vorteilhaft folgende Gruppen von Verbindungen eingesetzt: Mono- und Dialkylzinnverbindungen mit 1 bis 10 C-Atomen im Alkylrest, bei denen die restlichen Wertigkeiten des Zinns über Sauerstoff- und/oder Schwefelatome mit weiteren organischen Substituenten, die vorzugsweise Estergruppierungen enthalten, verbunden sind. Gute Ergebnisse werden erhalten, wenn ein Wärmestabilisator der letztgenannten Gruppe mit einem Anteil von 0,3 bis 3 Gew.-%, insbesondere von 0,5 bis 2,5 Gew.-%, bezogen auf die Formmasse, vorhanden ist.

Ferner werden bevorzugt eingesetzt bekannte Wärmestabilisatoren für Polyvinylchlorid, die aus Gemischen von Salzen der Metalle der zweiten Haupt- und Nebengruppe des Periodischen Systems der Elemente mit aliphatischen, gegebenenfalls Hydroxygruppen enthaltenden Carbonsäuren, die 4 bis 18 C-Atome enthalten, bestehen und denen ferner insbesondere Phenolate, die gegebenenfalls am aromatischen Kern Substituenten tragen können, aber auch Naphthenate von Metallen der zweiten Haupt- und Nebengruppe des Periodischen Systems der Elemente sowie weiterhin aliphatische Polyhydroxy- und Epoxy-Verbindungen beigemischt sein können, wobei besonders bevorzugt solche bekannten Wärmestabilisatoren sind, die im wesentlichen aus Calcium- und Zinksalzen oder im wesentlichen aus Barium- und Cadmiumsalzen bestehen. Von den in diesem Abschnitt genannten Wärmestabilisatoren werden vorteilhaft 0,5 bis 5 und insbesondere 0,5 bis 3,5 Gew.-%, bezogen auf die Formmasse, eingesetzt.

Weiterhin werden als bekannte Wärmestabilisatoren für Polyvinylchlorid vorzugsweise basische und/oder neutrale Bleisalze von anorganischen Mineralsäuren wie Schwefel-, Phosphor-, oder phosphorige Säure und/oder von aliphatischen Carbonsäuren mit 4 bis 18 C-Atomen in Mengen von 0,5 bis 5, insbesondere von 0,5 bis 3,5 Gew.-%, bezogen auf die Formmasse, verwendet.

Neben diesen vorzugsweise eingesetzten Stabilisatoren können weitere, wie beispielsweise Aminocrotonsäureester, Harnstoff- und Thioharnstoff-Derivate wie Monophenylharnstoff und Diphenylthioharnstoff, sowie $\alpha$-Phenylindol und andere Stabilisatoren, wie sie in der Monographie von H. Kainer, »Polyvinylchlorid und Vinylchlorid-Mischpolymerisate«, Springer-Verlag 1965, Seiten 209 bis 234 und 246 bis 258, oder in »The Stabilization of Polyvinyl Chloride« von F. Chevassus und R. de Broutelles; Edward Arnold Publisher's Ltd. 1963, Seiten 102 bis 129, oder in »Die Stabilisierung der Kunststoffe gegen Licht und Wärme« von J. Voigt; Springer-Verlag 1966, Seiten 614 bis 643, beschrieben sind, verwendet werden.

Neben den Gleitmitteln und Wärmestabilisatoren kann die thermoplastische Formmasse noch weitere Stoffe enthalten, die die Verarbeitung zum Formkörper verbessern oder die Eigenschaften des erzeugten Formkörpers in gewünschter Weise verändern. Solche Stoffe sind beispielsweise bekannte Weichmacher, Füllstoffe, Pigmente, modifizierende Mittel wie Mittel zur Verbesserung der Schlagzähigkeit, der optischen Qualität, der antistatischen oder Antibeschlageigenschaften sowie der Flammfestigkeit und Lichtbeständigkeit.

Als Weichmacher können beispielsweise ein oder mehrere Ester aromatischer oder aliphatischer Di- und Tricarbonsäuren höherer Alkylsulfonsäuren und der Phosphorsäure wie Dibutyl-di-2-ethylhexyl-, Dicyclohexyl-, Didecyl-, Butylbenzylphthalat; Di-n-hexylazelat; Dibutylsebacat; Di-2-ethylhexyladipat; Acetyltributyl-, Acetyltri-2-ethylhexylcitrat; Alkylsulfosäureester des Phenols bzw. Kresols; Diphenyl-2-ethylhexyl-, Trikresyl-phosphat; epoxydierte Soja- oder Rizinusöle; ferner polymere Weichmacher, beispielsweise Adipinsäurepolyester mit aliphatischen Diolen, deren freie Hydroxygruppen gegebenenfalls acetyliert sind, in Mengen von 1 bis 45 Gew.-%, bezogen auf Gesamtmischung, verwendet werden.

Als Füllstoffe können beispielsweise ein oder mehrere anorganische Oxide, Carbonate oder Silikate wie Aluminiumoxid, Siliciumoxid, Calciumcarbonat, Aluminiumsilikat verwendet werden. Als Pigmente sind außer den obengenannten beispielsweise verwendbar Titandioxid, Zinkoxid, Zinksuldid, Bariumsulfat, Ruß sowie weitere hitzebeständige anorganische und organische Farbpigmente.

Als modifizierende Mittel zur Verbesserung der Schlagzähigkeit sind beispielsweise verwendbar ein oder mehrere Polymerisate aus Dienen wie Butadien, Cyclopentadien mit Acryl- und Metharcylsäuren, deren Estern mit aliphatischen Alkoholen mit 1 bis 10 Kohlenstoffatomen wie Butyl-2-ethylhexylacrylat, Methylmethacrylat, deren Amiden, Nitrilen wie Acrylnitril sowie mit Styrol und substituierten Styrolen, ferner Polymerisate aus Olefinen wie Ethylen, Propylen, gegebenenfalls in Mischung mit Vinylestern aliphatischer Alkohole wie Vinylacetat, außerdem chlorierte Polyolefine wie Chlorpolyethylen.

Den Mischungen können ferner Mittel zur optischen Aufhellung, zur Verbesserung der antistatischen sowie der Antibeschlag-Eigenschaften, der Flammfestigkeit sowie der Fließfähigkeit bei der thermoplastischen Weiterverarbeitung von Halbzeugen und zur Verbesserung weiterer Gebrauchseigenschaften zugegeben werden.

Bezüglich des Zusatzes weiterer, hier nicht erwähnter Substanzen sei auf die Monographie von Helmut Kainer, »Polyvinylchlorid und Vinylchlorid-Mischpolymerisate«, Springer-Verlag Berlin, Heidelberg, New York, 1965, Seiten 235 bis 246 und 275 bis 329, verwiesen.

Das erfindungsgemäß behandelte Polymerisat oder Copolymerisat des Vinylchlorids zeigt, zu einer Formmasse wie beschrieben verarbeitet, eine überraschend gute Thermostabilität sowohl im Kurzzeit- (Anfangsfarbe) wie auch im Langzeitbereich. Hierdurch wird es möglich, mit dem behandelten Polymerisat hergestellte Formmassen bei höheren Temperaturen und damit größeren Ausstoßleistungen zu verarbeiten oder Formkörper mit hellerer Farbe und besserer Farbkonstanz herzustellen oder bei gleichen Verarbeitungsbedingungen und gleichen Ansprüchen an Farbe und Farbkonstanz mit geringeren Zusätzen stabilisierender Verbindungen auszukommen und damit Materialkosten einzusparen. Die für die erfindungsgemäße Behandlung benötigten Substanzen sind leicht zugänglich und wohlfeil erhältlich. Das neue Verfahren ist technisch ohne großen Investitionsaufwand oder deutliche Herstellkostenerhöhung in den ohnehin vorhandenen Produktionsanlagen durchführbar.

Nachfolgende erfindungsgemäße Beispiele und Vergleichsversuche sollen die Erfindung näher erläutern. Die angegebenen Testergebnisse und Meßwerte werden wie folgt ermittelt:

K-Wert der verwendeten Polymerisate, gemessen nach DIN 53 726

Kurzzeit-Thermostabilität (Anfangsfarbe) und Langzeit-Termostabilität

| | |
|---|---|
| Prüfmittel: | Walzwerk (zwei Walzen), |
| Walzendurchmesser: | 150 mm, |
| Walzentemperatur: | 170 bzw. 175°C (entsprechend den Angaben der Tabelle 1), |
| Walzendrehzahl: | 11 U/min, |
| Walzenfriktion: | Gleichlauf, |
| Prüfrezeptur: | Formulierungen A bis F gemäß Tabelle 1; |
| Prüfmethode: | 100 g Polyvinylchlorid mit dem K-Wert 60, das in wäßriger Suspension hergestellt wurde, werden mit den Rezepturbestandteilen der Formulierungen A bis F gemäß Tabelle 1 von Hand gut vermischt und auf dem Walzwerk zu einem homogenen Walzfell plastiziert. 5 Minuten nach der Materialaufgabe wird von dem umlaufenden Walzfell (ca. 0,5 mm Dicke) ein Prüfkörper mit den Abmessungen von etwa 20×40 mm herausgeschnitten und sofort zwischen Metallplatten geglättet und gekühlt. Diese Operation wird im weiteren Verlauf des Dauerwalztestes alle 5 Minuten wiederholt bis zur Schwarzfärbung des Walzfells. Die Prüfkörper werden nach der Reihenfolge der Entnahme geordnet und anhand ihrer Verfärbung nach Kurz- und Langzeitthermostabilität ausgewertet. |

Als Kriterium für die Kurzzeitstabilität wird die Farbe des ersten Prüfkörpers (=Anfangsfarbe) angegeben. Die Anfangsfarbe ist in der Reihenfolge farblos bis gelb bzw. gelbgrün in nachfolgender Farbskala von oben nach unten um so schlechter zu bewerten, je intensiver die Verfärbung ist.

Farblos,
leicht gelblich,
gelblich,
gelb(grün).

Prüfmethode: Die Langzeitstabilität wird durch die Zeit (in Minuten) gemessen, die von der Materialaufgabe bis zur Schwarzfärbung der kontinuierlich auf den Walzen gekneteten Walzfelle vergeht.

In nachfolgender Tabelle 2 ist unter Langzeitstabilität in einer zweiten senkrechten Spalte die Zeitdifferenz ($\Delta t$) in Prozent von den durch die Vergleichsversuche 1 bis 6 gegebenen grundlegenden Zeitwerten (in Minuten) für die Langzeitstabilität der Prüfrezepturen A bis F angegeben. Beispielsweise bedeutet in der $\Delta t$-Spalte die Angabe »+22«, daß die Langzeitstabilität dieses Versuches (Nr. 9) um 22% länger ist als die der direkt damit vergleichbaren Prüfrezeptur (Versuch Nr. 3), in der das gleiche, aber nicht vorbehandelte Polyvinylchlorid eingesetzt wurde.

Erfindungsgemäße Beispiele 1 bis 9 und Vergleichsversuche 1 bis 17

Die Vergleichsversuche 1 bis 6 der Tabelle 2 werden mit unvorbehandeltem Polymerisat durchgeführt. Sie dienen als Null-Werte zur Feststellung der Langzeitthermostabilitäts-Verbesserung.

Für die Vergleichsversuche 7 bis 17 wird ein Vinylchloridpolymerisat vom K-Wert 60 eingesetzt, das nach seiner Herstellung durch Polymerisation in wäßriger Suspension von der Hauptmenge der wäßrigen Flotte befreit wurde und noch ca. 10 Gew.-% Wasser enthält.

Für die Vergleichsversuche 7 bis 11 werden 5500 g des Vinylchloridpolymerisats unter ständigem Umschaufeln mit 500 $cm^3$ einer 15 g Natriumformiat enthaltenden wäßrigen Lösung besprüht und anschließend mit einem Warmluftstrom bei 75° C unter Normaldruck bis auf einen Restwassergehalt unter 0,2 Gew.-% (bezogen auf das Polymerisat) getrocknet. Je 100 Gewichtsteile des so erhaltenen Produktes werden in den Prüfrezepturen A bis E eingesetzt.

Für die Vergleichsversuche 12 bis 16 werden 5500 g des oben beschriebenen Vinylchloridpolymerisats unter Umschaufeln mit 500 $cm^3$ einer 5 g Dimethyl-di-(4-hydroxyphenyl)-methan enthaltenden acetonischen Lösung besprüht und weiterbehandelt wie zuvor beschrieben.

Für den Vergleichsversuch 17 werden, wie in der US-PS 2,625,521 beschrieben, zu 1000 g trockenem Vinylchloridpolymerisat mit K-Wert 60, das nach dem Suspensionsverfahren hergestellt wurde, 3 g fein zerriebenes Dimethyl-di-(4-hydroxyphenyl)-methan unter Umschaufeln gegeben und 100 Gewichtsteile dieser Mischung in Prüfrezeptur F eingesetzt.

Für die Beispiele 1 bis 9 wird wiederum das bei den Vergleichsversuchen 7 bis 11 beschriebene, wasserhaltige Vinylchloridpolymerisat eingesetzt.

5500 g hiervon werden unter Umschaufeln mit 500 $cm^3$ einer Flüssigkeit besprüht, die durch Zusammenmischen von 250 $cm^3$ einer wäßrigen Lösung, die 10 g Natriumformiat enthält und 250 $cm^3$ einer acetonischen Lösung, die 1 g Dimethyl-di-(4-hydroxyphenyl)-methan enthält, erhalten wurde. Anschließend wird auf einen Wassergehalt von weniger als 0,2 Gew.-%, bezogen auf das Polymerisat, bei 70° C unter Normaldruck getrocknet und das erhaltene Produkt für die Beispiele 1 bis 5 zu je 100 Gewichtsteilen in den Prüfrezepturen eingesetzt.

Weitere je 2200 g des oben beschriebenen Vinylchloridpolymerisats werden mit je 200 $cm^3$ einer wäßrigen Calciumformiat- bzw. einer wäßrigen Magnesiumformiat-Lösung die jeweils 4 g Formiat enthält und anschließend jede der beiden Proben mit 50 $cm^3$ einer Lösung von 0,4 g Dimethyl-di-(4-hydroxyphenyl)-methan unter Umschaufeln besprüht und anschließend bei Normaldruck und 80° C im Luftstrom getrocknet. Die zunächst mit Calciumformiat-Lösung und die zunächst mit Magnesiumformiat-Lösung behandelten Proben werden getrennt zu je 100 Gewichtsteile in den Prüfrezepturen A und C eingesetzt (Beispiele 6 bis 9).

**Tabelle 1**

**Prüfrezepturen mit üblichen Thermostabilisatoren.
In diesen Rezepturen werden die verschieden vorbehandelten Vinylchloridpolymerisate (siehe Tabelle 2) bei der unten angegebenen Walzentemperatur erprobt.**

| | Formulierungen (Zahlen = Gewichtsteile) | | | | | |
|---|---|---|---|---|---|---|
| | A | B | C | D | E | F*) |
| Polyvinylchlorid | 100 | 100 | 100 | 100 | 100 | 100 |
| DOP**) | | 42 | | | | 50 |
| Di-n-butylzinnmerkaptid | | | 1,0 | 1,5 | | |
| Bleistearat (zweibasisch) | | | | | 1,5 | 1,5 |
| Zn-ethylhexanoat | 0,15 | | | | | |
| Zn-stearat | | 0,2 | | | | |
| Ca-stearat | 0,20 | 0,3 | | | | |
| Dodecyl-$\alpha$-phenyl-indol | 0,45 | | | | | |
| epoxidiertes Sojaöl | 4,0 | 2,5 | | | | |
| Stearinsäure | | | 0,2 | | | |
| Montansäureester | | | | 1,0 | | |
| Walzentemperatur, °C | 175 | 170 | 170 | 175 | 175 | 170 |

*) Für den Vergleichsversuch nach US-PS 2 625 521.
**) Di-ethylhexylphthalat.

Tabelle 2

| | Prüf-Rezeptur | Vorbehandlung des Vinylchloridpolymerisats | Anfangsfarbe | Langzeit-Stabilität min | $\Delta t$ in % |
|---|---|---|---|---|---|
| Vergleichs-Versuch Nr. | | | | | |
| 1 | A | keine | leicht gelblich | 45 | Nullwerte |
| 2 | B | keine | gelblich | 55 | |
| 3 | C | keine | gelblich | 45 | |
| 4 | D | keine | leicht gelblich | 70 | |
| 5 | E | keine | gelblich | 75 | |
| 6 | F | keine | gelblich | 75 | |
| 7 | A | 0,3% Na-formiat | gelbgrün | 132 | +200 |
| 8 | B | C,3% Na-formiat | gelb | 60 | + 10 |

Fortsetzung

| | Prüf-Rezeptur | Vorbehandlung des Vinylchloridpolymerisats | Anfangsfarbe | Langzeit-Stabilität min | Langzeit-Stabilität Δt in % |
|---|---|---|---|---|---|
| Vergleichs-Versuch Nr. | | | | | |
| 9 | C | 0,3% Na-formiat | gelb | 55 | + 22 |
| 10 | D | 0,3% Na-formiat | gelb | 100 | + 43 |
| 11 | E | 0,3% Na-formiat | gelb | 85 | + 13 |
| 12 | A | 0,1% DMDHPM*) | farblos | 48 | < 1 |
| 13 | B | 0,1% DMDHPM | leicht gelblich | 88 | + 6 |
| 14 | C | 0,1% DMDHPM | leicht gelblich | 48 | < 1 |
| 15 | D | 0,1% DMDHPM | leicht gelblich | 70 | ± 0 |
| 16 | E | 0,1% DMDHPM | gelblich | 75 | ± 0 |
| 17 | F | 0,3% DMDHPM**) | gelblich | 75 | ± 0 |
| Beispiel Nr. | | | | | |
| 1 | A | 0,2% Na-formiat<br>0,02% DMDHPM | farblos | 130 | +200 |
| 2 | B | desgl. | leicht gelblich | 150 | +170 |
| 3 | C | desgl. | leicht gelblich | 135 | + 93 |
| 4 | D | desgl. | gelblich | 108 | + 55 |
| 5 | E | desgl. | gelblich | 95 | + 26 |
| 6 | A | 0,2% Ca-formiat<br>0,02% DMDHPM | leicht gelblich | 115 | +156 |
| 7 | C | desgl. | leicht gelblich | 120 | +166 |
| 8 | A | 0,2% Mg-formiat<br>0,02% DMDHPM | leicht gelblich | 95 | +110 |
| 9 | C | desgl. | leicht gelblich | 100 | +120 |

Prozentangaben bei den Zusatzstoffen bedeuten Gew.-% bezogen auf das Polymerisat.
*) DMDHPM = Dimethyl-di-(4-hydroxyphenyl)-methan.
**) Vergleichsversuch nach US-PS 2 625 521.

**Patentansprüche**

1. Verfahren zur Behandlung eines Polymerisates oder Copolymerisates des Vinylchlorids, das 50 bis 100 Gew.-%, bezogen auf das reine Polymerisat polymerisierte Vinylchlorid-Einheiten enthält und das nach üblichem Verfahren in wäßriger Emulsion, wäßriger Suspension, in Masse oder in der Gasphase hergestellt worden ist, mit Alkali- oder Erdalkalimetallsalzen der Ameisensäure, dadurch

gekennzeichnet, daß dem Polymerisat nach seiner Herstellung und, sofern vorhanden, nach Abtrennung der Hauptmenge der bei der Polymerisation verwendeten wäßrigen Flotte, jedoch vor Beendigung der Trocknung, entweder feinteilig in fester Form oder in einer Flüssigkeit in dispergierter Form oder in Form einer Lösung zugesetzt werden:

a) mindestens ein Natrium-, Kalium-, Magnesium- oder Calciumsalz der Ameisensäure und
b) mindestens eine Verbindung der Formel

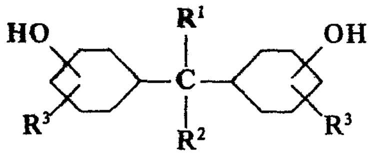

(I)

worin bedeuten:

$R^1$ ein Alkylradikal mit 1 bis 3 C-Atomen;
$R^2$ ein Alkylradikal mit 1 bis 2 C-Atomen;
$R^3$ ein Wasserstoff- oder ein Chlor-Atom oder ein Alkylradikal mit 1 bis 3 C-Atomen;
OH eine Hydroxylgruppe in 2- oder 4-Stellung zur

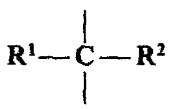 -Gruppe

wobei der Zusatz in einer solchen Menge erfolgt, daß das Polymerisat nach der Trocknung

0,05 bis 2 Gew.-%, bezogen auf das Polymerisat, von der Verbindung a) und
0,005 bis 1 Gew.-%, bezogen auf das Polymerisat, von der Verbindung b) enthält.

2. Verfahren nach Anspruch 1, dadurch gekennzeichnet, daß die Verbindung a) ein Natrium- oder Kaliumsalz ist.

3. Verfahren nach Anspruch 1, dadurch gekennzeichnet, daß die Verbindung b) der Formel I entspricht, worin bedeuten:

$R_3$ ein Wasserstoffatom und
OH eine Hydroxylgruppe in 4-Stellung zur

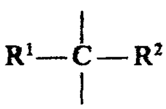 -Gruppe

4. Verfahren nach Anspruch 3, dadurch gekennzeichnet, daß die Verbindung b) Dimethyl-di-(4-hydroxyphenyl)-methan ist.

5. Verfahren nach Anspruch 1 oder 2, dadurch gekennzeichnet, daß der Zusatz der Verbindung(en) a) in einer solchen Menge erfolgt, daß das Polymerisat nach der Trocknung 0,1 bis 0,8 Gew.-%, bezogen auf das Polymerisat, der Verbindung(en) a) enthält.

6. Verfahren nach Anspruch 1, 3 oder 4, dadurch gekennzeichnet, daß der Zusatz der Verbindung(en) b) in einer solchen Menge erfolgt, daß das Polymerisat nach der Trocknung 0,01 bis 0,5 Gew.-%, bezogen auf das Polymerisat, der Verbindung(en) b) enthält.

7. Verfahren nach Anspruch 1, dadurch gekennzeichnet, daß eine Lösung der Verbindung(en) a) in Wasser, gegebenenfalls unter Zugabe eines aliphatischen Alkohols mit 1 bis 3 C-Atomen, und eine Lösung der Verbindung(en) b) in mindestens einem leichtflüchtigen, organischen Lösungsmittel mit 1 bis 4 C-Atomen, das mit Wasser mischbar ist, gegebenenfalls unter Zugabe von Wasser, auf das in Bewegung gehaltene Polymerisat gesprüht werden und das so behandelte Polymerisat anschließend unter normalem Atmosphärendruck oder einem darunterliegenden Druck bei 40 bis 100°C getrocknet wird.

## Claims

1. A process for treating a polymer or copolymer containing 50 to 100% by weight, relative to the pure polymer, of polymerised vinyl chloride and being prepared by known methods in aqueous emulsion, aqueous suspension, bulk or gas phase, with formic acid salts of alkali metals or alkaline

earth metals, characterised by adding to the polymer after the polymerisation and, if any, after separation of the main part of the aqueous liquid which has been applied during the polymerisation but before the end of the drying, either in finely divided solid particles or dispersed or dissolved in a liquid:

a) at least one formic acid salt of sodium, potassium, magnesium oder calcium and
b) at least one compound having the formula:

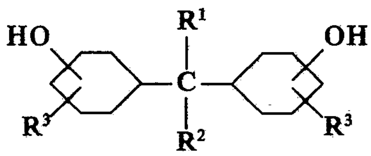

(I)

wherein

$R^1$ is an alkyl group having 1 to 3 carbon atoms
$R^2$ is an alkyl group having 1 to 2 carbon atoms
$R^3$ is a hydrogen- or a chlorine atom or an alkyl group having 1 to 3 carbon atoms
OH is a hydroxylic group being arranged in the 2- or the 4-position, relative to the

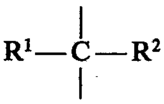 -group,

the compounds a) and b) being added in such amounts that the polymer contains after drying:

0.05 to 2% by weight, relative to the polymer, of the compound a) and
0.005 to 1% by weight, relative to the polymer, of the compound b).

2. A process as claimed in claim 1, characterised in that the compound a) is a salt of sodium or potassium.

3. A process as claimed in claim 1, characterised in that the compound b) corresponds to the Formula (I) wherein:

$R^3$ is a hydrogen atom and
OH is a hydroxylic group being arranged in the 4-position, relative to the

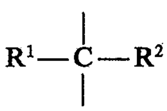 -group.

4. A process as claimed in claim 3, characterised in that the compound b) is dimethyl-di-(4-hydroxyphenyl)-methane.

5. A process as claimed in either of claims 1 or 2, characterised in that the compound(s) a) is (are) added in such an amount that the polymer contains after drying 0.1 to 0.8% by weight, relative to the polymer, of the compound(s) a).

6. A process as claimed in either of claims 1, 3 or 4, characterised in that the compound(s) b) is (are) added in such an amount that the polymer contains after drying 0.01 to 0.5 % by weight, relative to the polymer, of the compound(s) b).

7. A process as claimed in claim 1, characterised by spraying onto the moved polymer a solution of the compound(s) a) in water, optionally with the addition of an aliphatic alcohol having 1 to 3 carbon atoms, and a solution of the compound(s) b) in at least one easy volatile and water miscible organic solvent having 1 to 4 carbon atoms, if appropriate with addition of water and subsequently drying the treated polymer at 40 to 100° C under normal atmospheric or reduced pressure.

**Revendications**

1. Procédé de traitement de polymères ou de copolymères du chlorure de vinyle comprenant 50 à 100% en poids, par rapport au polymère pur, de motifs de chlorure de vinyle polymérisés, et qui ont été obtenus par des procédés courants en émulsion aqueuse, en suspension aqueuse, en masse ou en phase gazeuse, avec des sels de métaux alcalins ou alcalino-terreux de l'acide formique, procédé caractérisé en ce que l'on ajoute au polymère après sa préparation et, si c'est le cas, après séparation

de la majeure partie du bain aqueux de polymérisation, mais avant la fin du séchage, soit à l'état solide finement divisé, soit à l'état dispersé dans un liquide, soit encore en solution:

a) un ou plusieurs sels de sodium, potassium, magnésium ou calcium de l'acide formique,
b) un ou plusieurs composés de formule

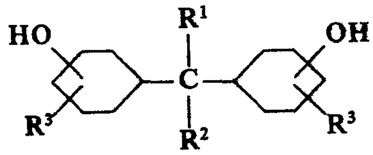

(I)

dans laquelle

$R^1$ représente un alkyle en $C_1$ à $C_3$,
$R^2$ un alkyle en $C_1$ ou $C_2$,
$R^3$ un atome d'hydrogène ou de chlore ou un alkyle en $C_1$ à $C_3$, et
OH est un hydroxyle à la position 2 ou 4 par rapport au groupe

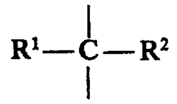

dans des proportions telles qu'après avoir été séché, le polymère contienne:

0,05 à 2% de son poids du composé a) et

0,005 à 1% de son poids du composé b).

2. Procédé selon la revendication 1, caractérisé en ce que le composé a) est un sel de sodium ou de potassium.

3. Procédé selon la revendication 1, caractérisé en ce que dans le composé b) de formule I, $R_3$ est un atome d'hydrogène et OH un hydroxyle à la position 4 par rapport au groupe

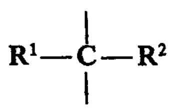

4. Procédé selon la revendication 3, caractérisé en ce que le composé b) est le diméthyl-di-(4-hydroxyphényl)-méthane.

5. Procédé selon la revendication 1 ou 2, caractérisé en ce que le ou les composés a) sont ajoutés dans une proportion telle que le polymère, après séchage, contienne 0,1 à 0,8% de son poids de ce composé ou de ces composés a).

6. Procédé selon la revendication 1, 3 ou 4, caractérisé en ce que le ou les composés b) sont ajoutés dans une proportion telle que le polymère, après séchage, contienne 0,01 à 0,5% de son poids de ce composé ou de ces composés b).

7. Procédé selon la revendication 1, caractérisé en ce que l'on pulvérise sur le polymère maintenu en mouvement une solution aqueuse du ou des composés a), éventuellement additionnée d'un alcool aliphatique en $C_1$ à $C_3$ et une solution du ou des composés b) dans un ou plusieurs solvants organiques en $C_1$ à $C_4$ facilement volatils et miscibles à l'eau, solution éventuellement additionnée d'eau, puis on sèche le polymère ainsi traité entre 40 et 100°C sous la pression atmosphérique normale ou à une pression inférieure à l'atmosphère.